(19) Europäisches Patentamt
European Patent Office
Office européen des brevets

(11) **EP 2 806 746 B1**

(12) **EUROPEAN PATENT SPECIFICATION**

(45) Date of publication and mention
of the grant of the patent:
**21.10.2015 Bulletin 2015/43**

(51) Int Cl.:
***A23D 7/005*** (2006.01)

(21) Application number: **13700671.4**

(86) International application number:
**PCT/EP2013/050473**

(22) Date of filing: **11.01.2013**

(87) International publication number:
**WO 2013/110508 (01.08.2013 Gazette 2013/31)**

(54) **AERATED COMPOSITIONS CONTAINING EGG ALBUMEN PROTEIN AND HYDROPHOBIN**

MIT LUFT DURCHSETZTE ZUSAMMENSETZUNGEN MIT EI-ALBUMIN-PROTEIN UND HYDROPHOBIN

COMPOSITIONS AÉRÉES CONTENANT DE LA PROTÉINE D'ALBUMEN D' UF ET DE L'HYDROPHOBINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2012 EP 12152824**

(43) Date of publication of application:
**03.12.2014 Bulletin 2014/49**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **KUIL, Gijsbert**
**NL-3133 AT Vlaardingen (NL)**
• **DE GROOT, Petrus, Wilhelmus, N**
**NL-3133 AT Vlaardingen (NL)**
• **BLIJDENSTEIN, Theodorus, Berend, Jan**
**NL-3133 AT Vlaardingen (NL)**
• **WIERINGA, Jan, Alders**
**NL-3133 AT Vlaardingen (NL)**

(74) Representative: **van Benthum, Wilhelmus A. J.**
**Unilever Patent Group**
**Olivier van Noortlaan 120**
**3133 AT Vlaardingen (NL)**

(56) References cited:
WO-A1-2008/046729    WO-A1-2008/116715
WO-A1-2010/067059    US-A1- 2008 175 972
US-A1- 2010 112 179    US-A1- 2010 303 987

## Description

The present invention relates to aerated compositions containing egg albumen protein and hydrophobin and a method for making these compositions.

## BACKGROUND OF THE INVENTION

Many food products are aerated, such as mousses, ice cream, and whipped cream. These food products contain small gas bubbles, and the gases may include air, nitrogen, and/or carbondioxide. Aerated food products are being developed with two aspects which are of importance: first the foamability (how easy is it to aerate the food product), and second the stability of the aeration during storage (how well remain the air bubbles intact upon storage of the aerated food product).

Hydrophobins are proteins known for their ability to effectively stabilise gas bubbles in compositions. The hydrophobins contribute both to foamability and foam stability. For example WO 2006/010425 A1, WO 2007/039064 A1, WO2010/136354 A1, and WO 2010/136355 A1 disclose aerated compositions containing hydrophobins.

Also egg albumen (egg white) is traditionally known for its ability to be aerated and be used as an ingredient in aerated food products. US 5,925,394 discloses a method to produce a foamed food product contained chicken egg white protein, wherein the protein is denatured, e.g. by heat, and concurrently foaming.

US 4,244,982 discloses a method to produce a mousse or the like containing egg white protein, which can be heat-sterilised or pasteurised.

GB 1 233 258 discloses a frozen confection, produced by foaming a composition containing egg white, heating it to coagulate the protein, and subsequently freezing the obtained foam.

EP 1 166 655 A1 discloses a moist foam product comprising denaturated proteins and wherein the bubbles are stabilised by protein denaturation at the interface of said bubbles and by a network building in the bulk. The protein may be an egg white protein, which may have been denatured by heating.

WO 2005/036976 A1 discloses a method for strengthening a protein-containing food product by heating the product and forming disulfide bonds between the proteins.

WO 2010/067059 A1 discloses a water-continuous emulsion, containing gas bubbles that are coated by protein containing cysteine residues. The coating of the gas bubbles is done by sonication. The compositions do not contain egg albumen protein. Similarly WO 02/060283 A2 describes a method to coat air bubbles with a protein using sonication. Also F. Tchuenbou-Magaia et al. (Journal of Texture Studies 42 (2011), p. 185-196) describes an oil-in-water emulsion (SF 40% in water, with xanthan), with air bubbles that are stabilised by cysteine rich protein (hydrophobin, bovine serum albumin, egg white protein), produced sonochemically.

Non pre-published patent application EP11153084 discloses products containing a combination of egg white protein (in the form of particles of denatured protein) and hydrophobin in aerated food products. These egg white protein particles have been denatured, to make them not surface active, before aerating a composition containing these particles and hydrophobin. As these particles are not surface active, they are not present at the gas bubble surface.

WO 2008/046729 A1 discloses a foamed food product for improving satiety, that may contain egg protein and hydrophobin. This disclosure is silent about denaturation of protein, and silent about the presence of egg albumen protein on a bubble surface.

US 2010/0112179 A1 and WO 2008/116715 A1 disclose aerated products containing hydrophobin and that have a temperature of at least 50°C. The products may contain egg white, however there is no mentioning of its presence on a bubble surface. Similarly US 2010/0303987 A1 discloses the addition of hydrophobin to dough to decrease stalling of a cookie or cake. The dough may contain egg solids, however there is no mentioning of presence of egg albumen protein on a bubble surface.

US 2008/0175972 A1 discloses aerated food products containing hydrophobin. The compositions do not contain egg albumen protein.

Various publications describe a combination of proteins or proteins and polysaccharides to stabilise foams or emulsions. Examples of this are EP 1 402 790 A2, JP2008000061A, WO 2007/008560, E. Dickinson (Food Hydrocolloids 25 (2011), p.1966-1983), GB2134117, L.A. Glaser et al. (Food Hydrocolloids 21 (2007), p. 495-506), and S. Damodaran (Journal of Food Science 70 (2005), p. R54-R66).

## SUMMARY OF THE INVENTION

The stability of foams containing chicken egg white protein can still be improved, in spite of the developments in the prior art. Therefore it is an object of the present invention to provide aerated compositions containing chicken egg white protein that have an improved foamability as well as foam stability.

We have now determined that this object can be achieved by an aerated composition comprising water, denatured egg albumen protein, and hydrophobin. Such a composition is obtained by mixing water, egg albumen protein, and hydrophobin, followed by aerating the composition. In that case both hydrophobin and egg albumen protein will be present at the gas bubble surface to stabilise the gas bubbles. Upon heating the egg albumen protein will denature, while still remaining on the gas bubble surface, leading to stable gas bubbles and a stable foam.

This product has the advantage that both the foamability of the composition improves, as well as the foam stability during storage.

Accordingly in a first aspect the present invention provides an aerated composition comprising water, denatured egg albumen protein, and hydrophobin, wherein the composition has an overrun of maximally 200%, and wherein at least part of denatured egg albumen protein is present at the gas bubble surface.

In a second aspect the present invention provides a method for producing a composition according to the first aspect of the invention, comprising the following steps:

  a) mixing water, egg albumen protein, and hydrophobin;
  b) aerating the mixture from step a);
  c) optionally adding one or more ingredients to the aerated mixture from step b) in case the overrun of the mixture from step b) is higher than 200%, to decrease the overrun to maximally 200%; and
  d) heating the mixture from step b) or optionally step c) at a temperature ranging from 60°C to 200°C, preferably from 70°C to 100°C, during a period ranging from 30 seconds to 20 minutes.

DETAILED DESCRIPTION

Unless defined otherwise, all technical and scientific terms used herein have the same meaning as commonly understood by one of ordinary skill in the art.

All percentages, unless otherwise stated, refer to the percentage by weight, with the exception of percentages cited in relation to the overrun.

In the context of the present invention and unless stated otherwise, the average oil droplet diameter or average gas bubble diameter is expressed as the d4,3 value, which is the volume weighted mean diameter. The volume based bubble size equals the diameter of a bubble that has the same volume as a given bubble.

The term 'aerated' means that gas has been intentionally incorporated into a composition, for example by mechanical means. The gas can be any gas, but is preferably, in the context of food products, a food-grade gas such as air, nitrogen, nitrous oxide, or carbon dioxide. Hence the term 'aeration' is not limited to aeration using air, and encompasses the 'gasification' with other gases as well. The extent of aeration is measured in terms of 'overrun', which is defined as:

$$overrun = \frac{\text{volume of aerated product - volume of initial mix}}{\text{Volume of initial mix}} \times 100\% \qquad (1)$$

where the volumes refer to the volumes of aerated product and unaerated initial mix (from which the product is made). Overrun is measured at atmospheric pressure.

After formation, a foam will be vulnerable to coarsening and phase separation by mechanisms such as creaming, Ostwald ripening and coalescence. By creaming, gas bubbles migrate under the influence of gravity to accumulate at the top of a product. Ostwald ripening or disproportionation refers to the growth of larger bubbles at the expense of smaller ones. Coalescence refers to merging of air bubbles by rupture of the film in between them.

A stable foam or aerated food product in the context of the present invention is defined as being stable for at least 30 minutes, more preferred at least an hour, more preferred at least a day, even more preferred at least a week, and most preferred at least a month, and most preferred several months. A stable foam can be defined to be stable with regard to total foam volume, and/or gas bubble size, and looses maximally 20% of its volume during 1 month storage. On the other hand systems may exist which loose more than 20% of its volume during 1 month storage, which nevertheless are considered to have a good stability, as the stability of such foams is much better than comparative foams.

Such a foam can be produced by aerating a solution of interest using an aerolatte, kenwood mixer, or a BA Mixer, to a fixed overrun of for example 100%. The foam is then placed into a 100 mL measuring cylinder, stoppered, and stored at 5°C, and the foam volume measured over time. Foams of which the average bubble size strongly increases over time are regarded to be less stable than foams of which the average bubble size remains small over time.

*Aerated compositions*

In a first aspect the present invention provides an aerated composition as in claim 1.

The composition of the invention preferably can be used as a food product, to which other ingredients can be added if required. The composition can be used as a basis for foams and/or aerated compositions or food products.

Preferably, the composition of the invention has an overrun of at least 10%, preferably at least 30%, and preferably at least 100%. Additionally the composition may comprise a hydrocolloid thickener at a at a concentration ranging from 0.1% by weight to 1% by weight based on the weight of the composition. Hydrocolloid thickeners that may be used, are preferably xanthan gum, locust bean gum, guar gum, carrageenan, carboxy methylcellulose, starch, or combinations of these. Xanthan gum, carrageenan, locust bean gum or any combination of these thickeners are preferred. The thickener may have the effect that the hydrophobin and the egg albumen protein together form a protein layer around the gas bubbles.

The bubbles present in the aerated composition may have a wide range of sizes, preferably of up to 2000 micrometer. More preferably the average bubble size d4,3 is smaller than 1500 micrometer, more preferably the average bubble size d4,3 is smaller than 1000 micrometer. Preferably the major part of the bubbles is small, hence preferably at least 50% of the gas bubbles has a diameter of maximally 1000 micrometer. Preferably at least 25% of the gas bubbles has a diameter of maximally 500 micrometer. In some products a small average bubble size is desired, and in that case preferably at least 50% of the gas bubbles has a diameter of maximally 200 micrometer, and preferably at least 25% of the gas bubbles has a diameter of maximally 100 micrometer.

The composition of the invention contains denatured egg albumen protein on the gas bubble surface, due to the affinity of the protein both for the gas as well as the aqueous continuous phase. Preferably a combination of denatured egg albumen protein and hydrophobin is present at the gas bubble surface. The combination of these proteins leads to excellent bubble stability. Such a composition is obtained by mixing water, egg albumen protein, and hydrophobin, followed by aerating the composition. In that case both hydrophobin and egg albumen protein will both be present at the gas bubble surface to stabilise the gas bubbles. Upon heating the egg albumen protein will denature, while still remaining on the gas bubble surface, leading to stable gas bubbles and a stable foam.

*Hydrophobins*

Hydrophobins are a well-defined class of proteins (Wessels, 1997, Advances in Microbial Physiology 38: 1-45; Wosten, 2001, Annual Reviews of Microbiology 55: 625-646) that are capable of self-assembly at a hydrophobic/hydrophilic interface, and having a conserved sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad (1)$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-}C\text{-}X_{1\text{-}50}\text{-}C\text{-}X_{0\text{-}5}\text{-}C\text{-}X_{1\text{-}100}\text{-}C\text{-}X_{1\text{-}100}\text{-}C\text{-}X_{1\text{-}50}\text{-}C\text{-}X_{0\text{-}5}\text{-}C\text{-}X_{1\text{-}50}\text{-}C\text{-}X_m \qquad (2)$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as *Actinomycete* and *Streptomyces* sp. (WO 01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. *Trichoderma*), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol. 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus*; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade-'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO 01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

Hydrophobins are excellent foaming agents that lead to good foamability and good foam stability of a product to which the hydrophobin is added. Hydrophobins are generally rather expensive, hence the product developer has the tendency to keep the concentration of hydrophobin as low as possible. This not only leads to cost reduction, but also to saving of resources, as the production of the hydrophobin naturally costs energy. Preferably the concentration of hydrophobin ranges from 0.001% to 2% by weight, preferably from 0.001% to 1% by weight. Preferably the concentration of hydrophobin is at least 0.01% by weight, more preferably at least 0.02% by weight based on the weight of the composition. Preferably the concentration of hydrophobin is maximally 0.3% by weight, preferably at most 0.25% by weight based on the weight of the composition.

The hydrophobin used in the present invention can be a Class I or a Class II hydrophobin. Preferably the hydrophobin comprises class II hydrophobin, such as HFBI, HFBII, cerato-ulmin, or a combination of these. Preferably the hydrophobin is in isolated form. Preferably the hydrophobin is soluble in water. Preferably the hydrophobin is a class II hydrophobin HFBII.

When preparing the composition of the invention, the hydrophobin may be added to the other ingredients as a solution in water. The concentration of this solution in water is preferably between 1 and 25% by weight, preferably between 1 and 15% by weight.

*Egg albumen (egg white)*

Egg white is the common name for the clear liquid (also called the albumen or the glair) contained within an egg. In the context of the present invention egg white and egg albumen are considered to be synonyms. The product of the invention comprises egg albumen protein or egg white protein, preferably chicken egg albumen protein. The major proteins present in egg albumen are:

- About 54% Ovalbumin, which is a globular protein that aggregates upon application of heat (Weijers et al., Macromolecules, 2004, vol. 37, p. 8709-8714; Weijers et al., Food Hydrocolloids, 2006, vol. 20, p. 146-159);
- About 12-13% Ovotransferrin;
- About 11% Ovomucoid;
- About 4% Ovoglobulin G2;
- About 4% Ovoglobulin G3;
- About 1.5-3.5% Ovomucin;
- About 3.4% Lysozyme;
- About 1.5% Ovoinhibitor;
- About 1% Ovoglycoprotein.

The denaturation temperatures of some of these preferred proteins which are aggregated by heat are as follows (Fox, 1989, Developments in dairy chemistry, part 4, Elsevier, London and New York; Weijers et al., Food Hydrocolloids, 2006, vol. 20, p. 146-159):

ovalbumin: 75-84°C
ovotransferrin: 61-65°C
ovomucoid: 77°C
lysozyme: 69-77°C

Preferably, the concentration of the egg albumen protein ranges from 0.1% to 10% by weight of the composition, preferably from 0.1% to 5% by weight, preferably from 0.1% to 2% by weight.

Preferably, the composition is obtainable by a method wherein the protein is denatured by heating the product at a temperature ranging from 60°C to 200°C, preferably ranging from 70°C to 100°C, during a period ranging from 30 seconds to 20 minutes, preferably ranging from 1 minute to 15 minutes. Preferably the temperature ranges from 60 to 180°C, preferably from 60 to 150°C, more preferred from 60 to 100°C.

The heating temperature preferably is higher than the denaturation temperature of the proteins present in the egg albumen. Preferably the heating temperature is above 80°C, because at that temperature the major part of the egg albumen proteins present will denature and aggregate.

Preferably the heating temperature is at least 80°C, more preferred at least 82°C, more preferred at least 83°C. Preferably the temperature is maximally 100°C, more preferred maximally 97°C, most preferred maximally 95°C. A preferred range for the temperature is between 80 and 85°C, more preferred between 80 and 83°C, or alternatively between 83°C and 85°C. Preferred ranges combining these above mentioned preferred endpoints are within the scope of this invention.

The heating time of the protein solution preferably ranges from 30 seconds to 20 minutes, preferably from 1 minute to 15 minutes, more preferably from 2 to 5 minutes. The time needed for heating is related to the temperature, the higher the temperature, the shorter the heating time, and vice versa.

Preferably at least 2% by weight of the denatured egg albumen protein is localised at the gas bubble interface, based on the weight of the total amount of egg albumen protein., preferably at least 5%, preferably at least 10% by weight of the denatured egg albumen protein is localised at the gas bubble interface.

As indicated before, the advantages of the composition of the invention is not only that the foamability of the composition improves, but also the foam stability during storage. Foamability can be split in two parts; the first part relates to the ability to reach a high overrun, and the second to the ability to generate small bubbles during aeration. For some applications the presence of small bubbles is an advantage, hence if the average bubble size decreases, this is considered to be an advantage.

The composition of the invention can be used in an aerated food product. The composition of the invention is then used as such, or the aerated composition can be mixed with ingredients of such food product or with the food product itself. Preferred food products are soufflés, dressings, mayonnaise, light mayonnaise and other products.

One of the advantages of the composition of the invention is, that the aerated composition remains stable, also when other surface active compounds are present in the composition. Usually surface active compounds may interfere with gas bubble stabilisers that act to stabilise the gas bubbles in the composition. Such surface active compounds replace the gas bubble stabilisers at the bubble surface. Generally this will lead to an unstable aerated composition, wherein the aerated composition will collapse. Examples of such surface active compounds are phospholipids present in egg yolk, that is present as an ingredient in for example mayonnaise.

Preferably the composition of the invention is in the form of an oil-in-water emulsion. Any commonly available oil can be used to create the emulsion. Examples are dairy fat and vegetable oils like sunflower oil, olive oil, rapeseed oil, soybean oil, palm oil, or palm oil fractions, etcetera. Such emulsion may be created by dispersing an oil into the composition of the invention, or mixing the aerated composition of the invention with an oil-in-water emulsion. For example mixing the aerated composition of the invention with a mayonnaise or a dressing creates an oil-in-water emulsion according to the invention.

Preferably, an emulsion according to the invention comprises egg yolk or an egg yolk fraction, and preferably the total concentration of phospholipids is maximally 1% by weight of the composition, preferably maximally 0.6% by weight, preferably maximally 0.4% by weight.

*Method for preparing of the composition*

In a second aspect the present invention provides a method for producing a composition according to the first aspect of the invention, comprising the following steps:

a) mixing water, egg albumen protein, and hydrophobin;
b) aerating the mixture from step a);
c) optionally adding one or more ingredients to the aerated mixture from step b) in case the overrun of the mixture from step b) is higher than 200%, to decrease the overrun to maximally 200%; and
d) heating the mixture from step b) or optionally step c) at a temperature ranging from 60°C to 200°C, preferably from 70°C to 100°C, during a period ranging from 30 seconds to 20 minutes.

Additionally a hydrocolloid thickener at a concentration ranging from 0.1% by weight to 1% by weight based on the weight of the composition may be added in step a). Hydrocolloid thickeners that may be used, are preferably xanthan gum, locust bean gum, guar gum, carrageenan, carboxy methylcellulose, starch, or combinations of these. Xanthan gum, carrageenan, locust bean gum or any combination of these thickeners are preferred.

Preferably in step b) the mixture is aerated to an overrun of at least 10%, preferably at least 30%, and preferably at least 100%.

The egg albumen protein and hydrophobin stabilise gas bubbles in the aerated composition from step b). The maximum overrun of the composition that will be heated in step d) is 200%. Hence in case the aeration in step b) leads to an overrun of more than 200%, then one or more ingredients are added to mixture from step b) to decrease the overrun to maximally 200%. Effectively the foam is diluted in that case. Hence in step d) the mixture from step b) or optionally step c) at a maximum overrun of 200% is heated at a temperature ranging from 60°C to 200°C, preferably from 70°C to 100°C, during a period ranging from 30 seconds to 20 minutes.

The heating in step d) leads to denaturation of egg albumen protein on the surface of the gas bubbles. Therewith at least part of the denatured egg albumen protein is present at the gas bubble surface. Like the egg albumen protein, also the hydrophobin is surface active, and hydrophobin will be present at the gas bubble surface after the aeration in step b). Hence after the heating in step d) preferably a combination of denatured egg albumen protein and hydrophobin is present at the gas bubble surface.

The temperature in step d) ranges from 60°C to 200°C, preferably the temperature ranges from 60 to 180°C, preferably from 60 to 150°C, preferably from 60 to 100°C, preferably ranges from 70°C to 100°C. The heating time of the protein solution preferably ranges from 30 seconds to 20 minutes, preferably from 1 minute to 15 minutes, more preferably from 2 to 5 minutes.

The heating of the aerated composition in step d) may be done by any common method, for example in a vessel in a water bath or an oil bath, or in an oven. Preferably the heating of the mixture from step b) or optionally step c) is done using a microwave oven. The power required for the microwave is such that the temperature during the heating step is within the range as indicated herein before. More preferred, when using a microwave, preferably , the heating period ranges from 30 seconds to 4 minutes.

The composition obtained from heating step d) preferably is brought into contact with one or more other ingredients of a food product, in order to prepare an aerated food product. The one or more other ingredients may be in the form of single and separate ingredients that need to be processed before a final food product is prepared. The one or more ingredients may also already constitute a final food product. For example, the composition obtained from heating step d) may be mixed with a mayonnaise or dressing, to prepare an aerated mayonnaise or dressing.

DESCRIPTION OF FIGURE

*Figure* 1. Picture of soufflés from example 3. The sample on the right contains hydrophobin while the sample on the left does not contain hydrophobin.
*Figure 2:* X-ray tomography images of horizontal and vertical cross sections of aerated light mayonnaises from example 4, with heated egg white/HFB II foam after 42 days (left) and 192 days (left) of storage. The cross section of images corresponds to 14 mm.

EXAMPLES

The following non-limiting examples describe the present invention.

Hydrophobin Class II HFBII was used in all experiments. Supplier: Danisco A/s (Copenhagen, Denmark). This hydrophobin is produced by the fungus *Trichoderma reesei,* and isolated from fermentation broth. It is used as a 10 to 15 wt% aqueous solution, pH about 4.5, buffered with ammonium salt.

*Method: Determination of Relative Bubble diameter*

The bubble diameter in the foams is estimated using a turbiscan turbidity measurement. In principle this is a spectrophotometer that can be loaded with a glass tube containing a foam sample. Light transmitted at the tube and reflected is measured. This is translated into average bubble diameter.

Detailed procedure: sample volumes of approximately 20 mL were studied by turbidimetry using a Turbiscan Lab Expert (Formulation, Toulouse, France). We interpret the average backscattering along the height of the foam sample with exclusion of the top and bottom parts where the backscattering is affected by edge effects. The backscattering (BS) is related to the transport mean free path ($\Phi$) of the light in the sample through:

$$BS = \frac{1}{\sqrt{\lambda}}$$

In turn, the transport mean free path of light is related to the mean diameter (d) and the volume fraction ($\Phi$) of the gas bubbles through:

$$\lambda = \frac{2d}{3\Phi(1-g)Q}$$

Where *g* and *Q* are optical constants given by Mie theory (G. F. Bohren and D.R.Huffman, Absorption and Scattering of Light by Small Particles. Wiley, New York, 1983). For foam dispersed in a transparent liquid, this method provides an estimate of the number average bubble size.

In a full formulated aerated product the ratio $\lambda(t)/\lambda(0)$ is used as an approximation of the bubble size evolution, since these contains other ingredients at high concentration in addition to the air bubbles. Since these ingredients are known to be constant over time, the increase in mean free path $\lambda$ is considered to be caused by the bubble coarsening.

**Example 1 - Foam stability of egg white and Hydrophobin HFBII**

The commercial product Ovo d'or (Van Tol Convenience Food, 's-Hertogenbosch, The Netherlands) contains 11% egg white protein. A 100 mL sample of this product was mixed with 100 mL of an aqueous solution containing 1% xanthan gum (Keltrol RD ex CP Kelco, Nijmegen, The Netherlands), and to the mixture HFBII was added to reach a concentration of 0.1% HFBII. This mixture was aerated using a Kenwood type of kitchen mixer on full speed, resulting in overrun of around 900 %. One part of such high overrun foam was diluted with 8 parts of a 0.5% xanthan gum solution to a fixed overrun of 100%. The diluted foams contained 0.5% xanthan gum, 0.61% egg white protein, and 0.11% HFBII. Subsequently, part of the aerated mixture was heated in a microwave oven to 70°C, during 1 minute at a power of about 850 W. Another part was not heated, to determine the influence of the heating. Similar compositions were made without hydrophobin, to determine the effect of the hydrophobin, both in heated and unheated compositions.

After all preparation procedures, 20 ml of each sample was loaded into a vial and the turbidity was probed (using a Turbiscan Lab Expert (Formulaction, Toulouse, France)). From these data an average bubble size can be estimated, which is measured directly after preparation, d(t=0h), after 5 hours, d(t=5h), and after 120 hours, d(t=120h). Also the ratio between d(t=5h) and d(t=0h) was determined, and when this is 1 or close to 1, then the average bubble size does not increase during the storage of the aerated composition. In this example, samples 1, 2 and 3 are comparative examples and sample 4 is an example according to the invention.

*Table 1: Specifications of aerated compositions and their resulting bubble size stability (average bubble diameters in micrometer).*

| Foaming agent | Heat treatment | d(t=0h) [micro-meter] | d(t=5h) [micro-meter] | d(t=120h) [micro-meter] | d(t=5)/ d(t=0) [-] |
|---|---|---|---|---|---|
| Sample 1 - 0.61% egg white | no | 274 | 811 | >1000 | 2.9 |
| Sample 2 - 0.61% egg white | yes | 420 | 546 | >1000 | 1.3 |
| Sample 3 - 0.61% egg white +0.11% HFBII | no | 146 | 156 | 182 | 1.1 |
| Sample 4 - 0.61% egg white +0.11% HFBII | yes | 171 | 171 | 178 | 1.0 |

From comparative examples 1 and 2 it is apparent that heating of egg-white stabilised bubbles increases their stability to disproportionation, although it also increases the initial bubble size significantly. The samples which contain HFBII both have markedly smallest initial bubble sizes, indicating superior air phase microstructure. On the long term, sample 4 (according to the invention), shows significant improvement of bubble size stability. This indicates that there is a synergy between addition of HFBII and heating egg-white foams towards bubble size stability.

**Example 2 - Aerated Low Fat mayonnaise comprising heated foam stabilised by egg-white and Hydrophobin HFBII**

Low fat mayonnaises (Calvé light, ex Unilever, Rotterdam, Netherlands) were aerated by mixing in foams stabilised by egg-white powder (12.5% EWP, Hi Whip ex Bouwhuis Enthoven BV, Raalte, The Netherlands), Hydrophobin HFBII and their combinations, which were either heated or not heated.

The compositions were prepared by dispersing the egg white powder in water at a concentration of 12%, and adding HFBII at 0.2% and xanthan at 0.5%. This mixture was aerated using a Kenwood type of kitchen mixer on full speed, resulting in overruns around 900 %. This aerated mixture was diluted with 0.5% xanthan gum solution in water to a fixed overrun of 100%. The concentration of egg white was 1.33%, of HFBII it was 0.022%, and xanthan 0.5% in this aerated composition. Part of this aerated composition was heated in a microwave oven to 70°C, during 1 minute at a power of about 850 W. Another part was not heated. A similar composition was made without the HFBII, and heated at the same conditions.

These aerated compositions were mixed into low fat mayonnaise in order to achieve a final air phase volume percentage in the aerated mayonnaise of 30%, meaning an overrun of 42%. The final concentration of egg white and HFBII in these aerated light fat mayonnaises was 0.5% egg white, and 0.009% HFBII.

Final samples of aerated mayonnaises were transferred into a Perspex cylinder with an inner diameter of 11 mm for subsequent analysis of bubble size distribution through X-ray tomography. This method provides exact 3D information on bubble sizes. Samples were kept for four weeks and the volume averaged diameter d4,3, of the air bubbles in the aerated samples at 0 and 28 days were determined. Results are listed in table 2, as well as their relative increase d4,3(t=28d)/d4,3(t=0d). In this example, products 1 and 2 are comparative examples and product 3 is an example according to the invention.

*Table 2: Specifications of foams, aerated mayonnaises and their resulting bubble size stability (average bubble diameter d4,3 in micrometer).*

| Foaming agent | Heat treat-ment | Air phase vol% | d4,3 (t=0d) [micro-meter] | d4,3 (t=28d) [micro-meter] | d4,3(t=28d)/ d4,3(t=0d) [-] |
|---|---|---|---|---|---|
| Product1 - 0.59% egg white | yes | 30 | 296 | 1090 | 3.7 |
| Product 2 - 0.59% egg white + 0.009% HFBII | no | 29 | 226 | 857 | 3.8 |

(continued)

| Foaming agent | Heat treatment | Air phase vol% | d4,3 (t=0d) [micrometer] | d4,3 (t=28d) [micrometer] | d4,3(t=28d)/ d4,3(t=0d) [-] |
|---|---|---|---|---|---|
| Product 3 - 0.59% egg white + 0.009% HFBII | yes | 30 | 224 | 413 | 1.8 |

These data indicate that the initial bubble diameters are lower when hydrophobin is present and very similar, indicating that both these foams have an identical starting point and that hydrophobin improves the initial air phase microstructure. With respect to stability the data show that the two negative references show twice as much bubble growth as the sample according to the invention.

Altogether, these data demonstrate the synergistic effect of heating of egg-white foams together with addition of hydrophobin towards initial air bubble microstructure and especially bubble size stability, even in a complex food product like light mayonnaise, which contains other emulsifiers. Moreover, as the Calvé commercial light mayonnaises contain about 3 wt% egg yolk (meaning about 0.3 wt% phospholipids), this shows that even aerated emulsions containing phospholipids (that potentially destabilise gas bubbles) are stable. Thus these compositions can withstand the destabilising action emulsifiers like phospholipids.

**Example 3 - Preparation of Soufflé with added hydrophobin**

Two liquid soufflé bases were prepared, each by adding 375g of a commercial Soufflé mix (Alsa Soufflé, ex Unilever Food Solutions, Rotterdam) to 0.5 liters of water. This liquid base contains approximately 4.7 wt% of egg white. To one part on this soufflé-mix, 0.03 wt% of HFBII was added. Subsequently, the soufflé mix was aerated using a Kenwood kitchen mixer, operating at full speed for 5 minutes.

Equal amounts by weight of the aerated Soufflé mixes were transferred into greased moulds and baked in an oven at 180°C for 5 minutes. After this heat treatment, a picture was taken of the resulting soufflés and it was apparent that more volume was conserved in the Soufflé enriched with hydrophobin, as is shown in Figure 1. The sample on the right contains HFBII and has more volume than the corresponding soufflé without HFBII on the left.

**Example 4 - Aerated Low Fat mayonnaise comprising heated foam stabilised by egg-white and Hydrophobin HFBII**

Low fat mayonnaise (Hellmann's Light, ex Unilever, UK) was aerated by mixing in a foam stabilised by a combination of egg-white powder (12.5% EWP, Hi Whip ex Bouwhuis Enthoven BV, Raalte, The Netherlands) and HFBII.

The foam was prepared by dispersing the egg white powder in water at a concentration of 12.5%, adding HFBII at 0.2%, xanthan gum at 0.5% and NaCl at 0.5%. This mixture was aerated using a Kenwood type of kitchen mixer on full speed, resulting in an overrun around 650%. This aerated mixture was diluted with 0.5% xanthan / 0.5% NaCl solution to a fixed overrun of 100%.The resulting concentration of egg white was 1.9%, of HFBII it was 0.03%, xanthan gum 0.5%, and NaCl 0.5%. This aerated composition was heated to 65°C. The heated foam composition was mixed into low fat mayonnaise in order to achieve a final air phase volume percentage in the aerated mayonnaise of 27%, meaning an overrun of 37%.

As a comparison, an aerated light mayonnaise was produced according to US 2008/0175972 A1. Here, foam was made from a 0.1 wt% HFBII solution using a Kenwood type of kitchen mixer on full speed, resulting in an overrun of around 550%. For completeness, this foam was made without egg albumen protein. This foam was then combined with low fat mayonnaise in order to achieve a final air phase volume percentage in the aerated mayonnaise of 29%, meaning an overrun of 41%.

After these preparation procedures, 20 mL of each product was loaded into a vial, stored at ambient temperature (20-22°C), and the turbidity was probed over time following the procedure described above. From these data the relative bubble size evolution can be calculated, to compare the compositions containing egg albumen protein according to the invention, and compositions without egg albumen protein during a period of 9 months. At time zero (starting the experiment), the relative bubble size is 1.

*Table 3: Relative increase (λ(t) / λ(0)) of bubble size of aerated low fat mayonnaise comparing foams with and without egg albumen protein after 9 months.*

| Aerated system | Foam stabiliser | Air phase [vol%] | Relative bubble size $\lambda(t) / \lambda(0)$ after 9 months [-] |
|---|---|---|---|
| Low fat mayonnaise | HFBII and egg white | 27 | 1.07 |
| Low fat mayonnaise | HFBII | 29 | 1.9 |

To determine the average bubble size in the compositions, samples of aerated mayonnaises containing egg white were transferred into a perspex cylinder with an inner diameter of 11 mm for subsequent analysis of bubble size distribution through X-ray tomography (SkyScan 1172-A high-resolution desktop μCT system). This method provides exact 3D information on bubble sizes. Measurements were done after 6 weeks and 6 months.

*Table 4: Aerated low fat mayonnaise with heated egg white-HFBII foam and its resulting bubble size stability (average bubble diameter d4,3 in micrometer).*

| Aerated system | d4,3 (t=42d) [micrometer] | d4,3 (t=192d) [micrometer] |
|---|---|---|
| Low fat mayonnaise | 340 | 239 |

These measurements, and the corresponding x-ray tomography images (see Figure 4), show that the aerated products are very stable. Visually there is no major difference between the samples after 42 days and after 192 days. Some big bubbles can be seen in both samples, but the majority of bubbles remains small. The structure of the product does not appear to change.

The two characterizations of the aerated mayonnaises, as shown in Table 3 and Table 4, and Figure 4, prepared according to the current invention, are virtually fully stable against disproportionation or any other type of foam decay for at least 9 months. The composition with hydrophobin only (without egg white) are also stable, however not as stable as the current compositions of the invention. Moreover, as the Hellmann's commercial light mayonnaises contain about 2.6 wt% egg yolk (meaning about 0.26 wt% phospholipids), this shows that even aerated emulsions containing phospholipids (that potentially destabilise gas bubbles) are stable. Thus these compositions can withstand the destabilising action of emulsifiers like phospholipids.

**Example 5 - Aerated Sauce Hollandaise comprising heated foam stabilised by egg white and Hydrophobin HFBII**

Sauce Hollandaise (Knorr, ex Unilever Food Solutions, Rotterdam, Netherlands) was aerated by mixing in foams stabilised by a combination of egg white powder (5% EWP, Hi Whip ex Bouwhuis Enthoven BV, Raalte, The Netherlands) and HFBII (0.2%), which were either heated or not heated.

The composition was prepared by dispersing the egg white powder in water at a concentration of 5%, adding HFBII at 0.2%, xanthan gum at 1% and NaCl at 1%. This mixture was aerated using a Trefa type of continuous aerator mixer, resulting in an overrun around 200%. This aerated composition was divided, and the first part was not heated, and the other part was heated to 65°C. Final air phase volumes in the aerated sauce of 37% and 39% (meaning an overrun of 58% and 63%) were achieved, respectively.

After these preparation procedures, 20 ml of each product was loaded into a vial and the turbidity was probed over time following the procedure described above. During a period of 69 days the bubble size evolution was determined.

*Table 5: Influence of heating or not heating of an egg white-HFBII foam, mixed into sauce Hollandaise on relative increase (λ(t) / λ(0)) in bubble size after 69 days.*

| Aerated system | Foam heat treatment | Air phase vol% | $\lambda(t) / \lambda(0)$ [-] |
|---|---|---|---|
| Sauce Hollandaise 1 | No | 37 | 1.18 |
| Sauce Hollandaise 2 | Yes | 39 | 1.05 |

These data indicate that the aerated sauce with heated egg white-HFBII foam has improved stability as the value of λ(t) deviated less from the initial value λ(0). Moreover, as the Sauces Hollandaise contains about 6 wt% egg yolk (meaning about 0.6 wt% phospholipids), this shows that even aerated emulsions containing phospholipids (that potentially destabilise gas bubbles) are stable. Thus these compositions can withstand the destabilising action of emulsifiers like phospholipids.

**Claims**

1. An aerated composition comprising water, denatured egg albumen protein, and hydrophobin, wherein the composition has an overrun of maximally 200%, and wherein at least part of denatured egg albumen protein is present at the gas bubble surface, and wherein the concentration of the egg albumen protein ranges from 0.1% to 10% by weight of the composition.

2. A composition according to claim 1, having an overrun of at least 10%, preferably at least 30%, and preferably at least 100%.

3. A composition according to claim 1 or 2, wherein at least 50% of the gas bubbles has a diameter of maximally 1000 micrometer.

4. A composition according to any of claims 1 to 3, wherein a combination of denatured egg albumen protein and hydrophobin is present at the gas bubble surface.

5. A composition according to any of claims 1 to 4, wherein the concentration of hydrophobin ranges from 0.001% to 2% by weight, preferably from 0.001% to 1% by weight.

6. A composition according to any of claims 1 to 5, wherein the hydrophobin comprises class II hydrophobin.

7. A composition according to any of claims 1 to 6, wherein the concentration of the egg albumen protein ranges from 0.1 % to 5% by weight of the composition, preferably from 0.1 % to 2% by weight.

8. A composition according to any of claims 1 to 7, obtainable by a method wherein the protein is denatured by heating the product at a temperature ranging from 60°C to 200°C, preferably ranging from 70°C to 100°C, during a period ranging from 30 seconds to 20 minutes, preferably ranging from 1 minute to 15 minutes.

9. A composition according to any of claims 1 to 8, wherein the composition is in the form of an oil-in-water emulsion.

10. A composition according to claim 9, wherein the emulsion comprises egg yolk or an egg yolk fraction, and wherein the total concentration of phospholipids is maximally 1% by weight of the composition, preferably maximally 0.6% by weight, preferably maximally 0.4% by weight.

11. A method for producing a composition according to any of claims 1 to 10, comprising the following steps:

    a) mixing water, egg albumen protein, and hydrophobin;
    b) aerating the mixture from step a);
    c) optionally adding one or more ingredients to the aerated mixture from step b) in case the overrun of the mixture from step b) is higher than 200%, to decrease the overrun to maximally 200%; and
    d) heating the mixture from step b) or optionally step c) at a temperature ranging from 60°C to 200°C, preferably from 70°C to 100°C, during a period ranging from 30 seconds to 20 minutes; and
    wherein the concentration of the egg albumen protein ranges from 0.1 % to 10% by weight of the composition.

12. A method according to claim 11, wherein in step b) the mixture is aerated to an overrun of at least 10%, preferably at least 30%, and preferably at least 100%.

13. A method according to claim 11 or 12, wherein the heating of the mixture from step b) or optionally step c) is done using a microwave oven.

14. A method according to claim 13, wherein the heating period ranges from 30 seconds to 4 minutes.

15. A method according to any of claims 11 to 14, wherein the mixture from step d) is mixed with food ingredients to prepare an aerated food product.

**Patentansprüche**

1.  Mit Luft durchsetzte Zusammensetzung, umfassend Wasser, denaturiertes Eialbuminprotein und Hydrophobin, wobei die Zusammensetzung einen Überlauf von maximal 200% aufweist und wobei mindestens ein Teil des denaturierten Eialbuminproteins an der Oberfläche der Gasblasen vorliegt und wobei die Konzentration des Eialbuminproteins im Bereich von 0,1 bis 10 Gew.-% der Zusammensetzung liegt.

2.  Zusammensetzung gemäß Anspruch 1 mit einem Überlauf von mindestens 10%, vorzugsweise mindestens 30% und vorzugsweise mindestens 100%.

3.  Zusammensetzung gemäß Anspruch 1 oder 2, wobei mindestens 50% der Gasblasen einen Durchmesser von maximal 1000 Mikrometer haben.

4.  Zusammensetzung gemäß irgendeinem der Ansprüche 1 bis 3, wobei eine Kombination von denaturiertem Eialbuminprotein und Hydrophobin an der Oberfläche der Gasblasen vorhanden ist.

5.  Zusammensetzung gemäß irgendeinem der Ansprüche 1 bis 5, wobei die Konzentration des Hydrophobins im Bereich von 0,001 bis 2 Gew.-% liegt, vorzugsweise von 0,001 bis 1 Gew.-%.

6.  Zusammensetzung gemäß irgendeinem der Ansprüche 1 bis 5, wobei das Hydrophobin Hydrophobin der Klasse II umfasst.

7.  Zusammensetzung gemäß irgendeinem der Ansprüche 1 bis 6, wobei die Konzentration des Eialbuminproteins im Bereich von 0,1 bis 5 Gew.-% der Zusammensetzung liegt, vorzugsweise von 0,1 bis 2 Gew.-%.

8.  Zusammensetzung gemäß irgendeinem der Ansprüche 1 bis 7, erhältlich durch ein Verfahren, bei welchem das Protein durch Erwärmen des Produktes auf eine Temperatur im Bereich von 60°C bis 200°C, vorzugsweise im Bereich von 70°C bis 100°C, während eines Zeitraums im Bereich von 30 Sekunden bis 20 Minuten, vorzugsweise im Bereich von 1 Minute bis 15 Minuten, denaturiert wird.

9.  Zusammensetzung gemäß irgendeinem der Ansprüche 1 bis 8, wobei die Zusammensetzung in der Form einer Öl-in-Wasser-Emulsion vorliegt.

10. Zusammensetzung gemäß Anspruch 9, wobei die Emulsion Eidotter oder eine Eidotterfraktion umfasst und wobei die gesamte Konzentration von Phospholipiden maximal 1 Gew.-%, vorzugsweise maximal 0,6 Gew.-%, vorzugsweise maximal 0,4 Gew.-% der Zusammensetzung beträgt.

11. Verfahren zur Herstellung einer Zusammensetzung gemäß irgendeinem der Ansprüche 1 bis 10, umfassend die folgenden Schritte:

    a) Mischen von Wasser, Eialbuminprotein und Hydrophobin;
    b) Durchsetzen der Mischung aus Schritt a) mit Luft;
    c) wahlweises Zusetzen von einem oder mehreren Inhaltsstoffen zu der mit Luft durchsetzten Mischung aus Schritt b) in dem Fall, dass der Überlauf der Mischung aus Schritt b) höher als 200% ist, um den Überlauf auf maximal 200% zu verringern; und
    d) Erwärmen der Mischung aus Schritt b) oder wahlweise aus Schritt c) auf eine Temperatur im Bereich von 60°C bis 200°C, vorzugsweise 70°C bis 100°C, während eines Zeitraums im Bereich von 30 Sekunden bis 20 Minuten; und
    wobei die Konzentration des Eialbuminproteins im Bereich von 0,1 bis 10 Gew.-% der Zusammensetzung liegt.

12. Verfahren gemäß Anspruch 11, wobei in Schritt b) die Mischung bis zu einem Überlauf von mindestens 10%, vorzugsweise mindestens 30%, und vorzugsweise mindestens 100%, mit Luft durchsetzt wird.

13. Verfahren gemäß Anspruch 11 oder 12, wobei das Erwärmen der Mischung aus Schritt b) oder wahlweise Schritt c) unter Verwendung eines Mikrowellenherdes erfolgt.

14. Verfahren gemäß Anspruch 13, wobei der Zeitraum der Erwärmung im Bereich von 30 Sekunden bis 4 Minuten liegt.

**15.** Verfahren gemäß irgendeinem der Ansprüche 11 bis 14, wobei die Mischung aus Schritt d) mit Lebensmittel-Inhaltsstoffen gemischt wird, um ein mit Luft durchsetztes Lebensmittelprodukt herzustellen.

## Revendications

**1.** Composition aérée comprenant de l'eau, une protéine d'albumine d'oeuf dénaturée et une hydrophobine, la composition ayant un foisonnement d'un maximum de 200 %, et dans laquelle au moins une partie de la protéine d'albumine d'oeuf dénaturée est présente à la surface des bulles de gaz, et dans laquelle la concentration en protéine d'albumine d'oeuf est comprise dans la plage allant de 0,1 % à 10 % en poids de la composition.

**2.** Composition selon la revendication 1, ayant un foisonnement d'au moins 10 %, de préférence d'au moins 30 % et de préférence d'au moins 100 %.

**3.** Composition selon la revendication 1 ou 2, dans laquelle au moins 50 % des bulles de gaz ont un diamètre d'un maximum de 1000 micromètres.

**4.** Composition selon l'une quelconque des revendications 1 à 3, dans laquelle une combinaison de la protéine d'albumine d'oeuf dénaturée et de l'hydrophobine est présente à la surface de bulles de gaz.

**5.** Composition selon l'une quelconque des revendications 1 à 4, dans laquelle la concentration en hydrophobine est comprise dans la plage allant de 0,001 % à 2 % en poids, de préférence de 0,001 % à 1 % en poids.

**6.** Composition selon l'une quelconque des revendications 1 à 5, dans laquelle l'hydrophobine comprend l'hydrophobine de classe II.

**7.** Composition selon l'une quelconque des revendications 1 à 6, dans laquelle la concentration de la protéine d'albumine d'oeuf est comprise dans la plage allant de 0,1 % à 5 % en poids de la composition, de préférence de 0,1 % à 2 % en poids.

**8.** Composition selon l'une quelconque des revendications 1 à 7, pouvant être obtenue par un procédé dans lequel la protéine est dénaturée par chauffage du produit à température comprise dans la plage allant de 60 °C à 200 °C, de préférence dans la plage allant de 70 °C à 100 °C, pendant une période comprise dans la plage allant de 30 secondes à 20 minutes, de préférence dans la plage allant de 1 minute à 15 minutes.

**9.** Composition selon l'une quelconque des revendications 1 à 8, la composition étant sous la forme d'une émulsion huile dans l'eau.

**10.** Composition selon la revendication 9, dans laquelle l'émulsion comprend le jaune d'oeuf ou une fraction du jaune d'oeuf et dans laquelle la concentration totale en phospholipides est d'un maximum de 1 % en poids de la composition, de préférence d'un maximum de 0,6 % en poids, de préférence d'un maximum de 0,4 % en poids.

**11.** Procédé de production d'une composition selon l'une quelconque des revendications 1 à 10, comprenant les étapes suivantes consistant à :

a) mélanger l'eau, la protéine d'albumine d'oeuf et l'hydrophobine ;
b) aérer le mélange de l'étape a) ;
c) ajouter facultativement un ou plusieurs ingrédients au mélange aéré de l'étape b) dans le cas où le foisonnement du mélange de l'étape b) est supérieur à 200 %, pour diminuer le foisonnement à un maximum de 200 % ; et
d) chauffer le mélange de l'étape b) ou facultativement de l'étape c) à une température comprise dans la plage allant de 60 °C à 200 °C, de préférence de 70 °C à 100 °C, pendant une période comprise dans la plage allant de 30 secondes à 20 minutes ; et
dans lequel la concentration en protéine d'albumine d'oeuf est comprise dans la plage allant de 0,1 % à 10 % en poids de la composition.

**12.** Procédé selon la revendication 11, dans lequel dans l'étape b), le mélange est aéré à un foisonnement d'au moins 10 %, de préférence d'au moins 30 % et de préférence d'au moins 100 %.

**13.** Procédé selon la revendication 11 ou 12, dans lequel le chauffage du mélange de l'étape b) ou facultativement de l'étape c) est réalisé en utilisant un four micro-onde.

**14.** Procédé selon la revendication 13, dans lequel la période de chauffage est comprise dans la plage allant de 30 secondes à 4 minutes.

**15.** Procédé selon l'une quelconque des revendications 11 à 14, dans lequel le mélange de l'étape d) est mélangé avec des ingrédients alimentaires pour préparer un produit alimentaire aéré.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006010425 A1
- WO 2007039064 A1
- WO 2010136354 A1
- WO 2010136355 A1
- US 5925394 A
- US 4244982 A
- GB 1233258 A
- EP 1166655 A1
- WO 2005036976 A
- WO A1 A
- WO 2010067059 A1
- WO 02060283 A2
- EP 11153084 A

- WO 2008046729 A1
- US 20100112179 A1
- WO 2008116715 A1
- US 20100303987 A1
- US 20080175972 A1
- EP 1402790 A2
- JP 2008000061 A
- WO 2007008560 A
- GB 2134117 A
- WO 0174864 A
- WO 9641882 A
- WO 0157076 A

**Non-patent literature cited in the description**

- **F. TCHUENBOU-MAGAIA et al.** *Journal of Texture Studies,* 2011, vol. 42, 185-196
- **E. DICKINSON.** *Food Hydrocolloids,* 2011, vol. 25, 1966-1983
- **L.A. GLASER et al.** *Food Hydrocolloids,* 2007, vol. 21, 495-506
- **S. DAMODARAN.** *Journal of Food Science,* 2005, vol. 70, R54-R66
- **WESSELS.** *Advances in Microbial Physiology,* 1997, vol. 38, 1-45
- **WOSTEN.** *Annual Reviews of Microbiology,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol.,* 1999, vol. 65, 5431-5435
- **WOSTEN.** *Annu Rev. Microbiol.,* 2001, vol. 55, 625-646

- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **WEIJERS et al.** *Macromolecules,* 2004, vol. 37, 8709-8714
- **WEIJERS et al.** *Food Hydrocolloids,* vol. 20, 146-159
- **FOX.** Developments in dairy chemistry. Elsevier, 1989
- **WEIJERS et al.** *Food Hydrocolloids,* 2006, vol. 20, 146-159
- **G. F. BOHREN ; D.R.HUFFMAN.** Absorption and Scattering of Light by Small Particles. Wiley, 1983